# EUROPÄISCHE PATENTANMELDUNG

(11) **EP 4 113 303 A1**
(43) Veröffentlichungstag der Anmeldung: **04.01.2023**
(21) Anmeldenummer: 21020342.8
(22) Anmeldetag: 02.07.2021
(51) Int. Cl.: G06F 9/54, G06F 16/25, G06F 9/445

(54) **COMPUTERIMPLEMENTIERTES VERFAHREN ZUM EFFIZIENTEN ERZEUGEN VON UMFANGREICHEN KONFIGURATIONSDATEN**

(71) Anmelder: Schneider, Christoph, 36100 Petersberg (DE)
(72) Erfinder: Schneider, Christoph, 36100 Petersberg (DE)
(74) Vertreter: Reich, Jochen

(57) **Zusammenfassung**

Die vorliegende Erfindung betrifft ein Verfahren zum Verarbeiten von großen Datenmengen, sogenanntem big data, mittels unterschiedlicher Rechenarchitekturen und Arithmetiken. Hierbei können verteilte und heterogene Datenquellen zum Einsatz kommen. Die Erfindung ist ferner gerichtet auf eine entsprechend eingerichtete Systemanordnung. Ferner wird ein Computerprogrammprodukt mit Steuerbefehlen vorgeschlagen, welche das vorgeschlagene Verfahren implementieren beziehungsweise die vorgeschlagene Vorrichtung und Anordnung betreiben.

## Beschreibung

Die vorliegende Erfindung betrifft ein Verfahren zum Verarbeiten von großen Datenmengen, sogenanntem big data, mittels unterschiedlicher Rechenarchitekturen und Arithmetiken. Hierbei können verteilte und heterogene Datenquellen zum Einsatz kommen. Die Erfindung ist ferner gerichtet auf eine entsprechend eingerichtete Systemanordnung. Ferner wird ein Computerprogrammprodukt mit Steuerbefehlen vorgeschlagen, welche das vorgeschlagene Verfahren implementieren beziehungsweise die vorgeschlagene Vorrichtung und Anordnung betreiben.

EP 3 764 618 A1 zeigt ein Verfahren zur effizienten Optimierung von Speicherbelegungen, welches es ermöglicht, dass in einem Computernetzwerk vorhandene Ressourcen effizient genutzt werden können und hierbei die benötigte Bandbreite optimiert werden kann. Darüber hinaus ist es erfindungsgemäß ermöglicht, dass die Daten während des Auslagerns anonymisiert bzw. durch ein Segmentieren implizit verschlüsselt werden.

Aus dem Stand der Technik sind unterschiedliche Verarbeitungstechniken bekannt, die es ermöglichen in umfangreichen Datensätzen, so genanntem big data, Strukturen zu erkennen und entsprechend die Daten zu verarbeiten. Eine Herausforderung hierbei sind unterschiedliche Datentypen in den Rohdaten und somit entstehen Probleme die Daten untereinander kompatibel zu gestalten bzw. zu verarbeiten.

Vorgeschlagene Verfahren sind hierbei sehr rechenintensiv, was gerade bei umfangreichen Datensätzen ein Problem darstellt. Zwar weisen Prozessoren typischerweise mehrere Rechenkerne auf, hierbei entstehen jedoch oftmals aufwändige Rechenvorgänge und zudem gibt es Prozessorarchitekturen, welche bestimmte Arten von Matrizen nicht mit bereitgestellten Befehlssätzen für manche Anwendungsszenarien effizient genug abarbeiten können. Das Problem besteht insbesondere dann, falls umfangreiche Matrizen bereitgestellt werden, die zudem verteilt in einem Netzwerk abgelegt sind. Hierzu benötigt es eine Vielzahl von Pufferspeichern um in bestimmten Anwendungsszenarien die Matrizen effizient bearbeiten zu können. Zusammenfassend lässt sich also folgern, dass bestimmte Rechnerarchitekturen nicht für Matrizen optimiert sind.

Darüber hinaus sind in manchen Prozessortypen Befehlssätze festgeschrieben, also hart kodiert, und folglich ist es bei solchen Prozessoren nicht möglich dynamische Rechenschritte derart zu erzeugen, dass diese in Abhängigkeit der Konfigurationsdaten Anwendung finden können. Jedoch ist es wiederum nicht möglich optimierte Rechenschritte bereitzustellen, sondern vielmehr muss ein bestehender Befehlssatz verwendet werden, auch wenn dieser für bestimmte Eingangsdaten nicht optimiert ist.

Ganz allgemein besteht zudem das Problem, dass bei umfangreichen Datensätzen, so genanntem big data, eine Bearbeitung oftmals fehlerintensiv ist und zu dem große Hardwarekapazitäten benötigt. Fehler können daher resultieren, dass eine bestimmte Gleitkommaarithmetik Fehler hervorruft oder aber, dass Datentypen miteinander nicht kompatibel sind. So ist es möglich, dass beispielsweise Nachkommastellen in einem ersten Datentyp mit weniger Bits berechnet werden als in einem zweiten Datentyp. Somit kommt es hierbei unweigerlich zu einem Fehler, der gegebenenfalls weitere Fehlberechnungen mit sich führt.

Somit ist es eine Aufgabe der vorgeschlagenen Erfindung ein verbessertes Verfahren bereitzustellen, welches zum effizienten Erzeugen von umfangreichen Konfigurationsdaten geeignet ist und hierbei die genannten Probleme adressiert. Ferner ist es eine Aufgabe der vorliegenden Erfindung eine entsprechende Systemanordnung vorzuschlagen, welche gemäß dem Verfahren implementiert bzw. betrieben werden kann. Ferner soll ein Computerprogrammprodukt bereitgestellt werden, welches Steuerbefehle vorhält, welche das Verfahren implementieren beziehungsweise die vorgeschlagene Vorrichtung betreiben.

Die Aufgabe wird gelöst durch ein Verfahren mit den Merkmalen gemäß Patentanspruch 1. Weitere vorteilhafte Ausgestaltungen sind in den Unteransprüchen angegeben.

Demgemäß wird ein computerimplementiertes Verfahren zum effizienten Erzeugen von umfangreichen Konfigurationsdaten basierend auf heterogenen Datenquellen vorgeschlagen, aufweisend ein Auslesen einer abgespeicherten Matrix mit Konfigurationsdaten und Serialisieren der ausgelesenen Konfigurationsdaten gemäß einer ersten Serialisierungsmetrik; ein Auslesen mindestens einer weiteren abgespeicherten Matrix mit Konfigurationsdaten und Serialisieren der ausgelesenen Konfigurationsdaten gemäß einer zweiten Serialisierungsmetrik; ein Berechnen einer Relation zwischen den serialisierten Konfigurationsdaten; und ein Erstellen neuer Konfigurationsdaten in Abhängigkeit der berechneten Relation.

Erfindungsgemäß wird somit ein Verfahren zum effizienten Erzeugen von umfangreichen Konfigurationsdaten vorgeschlagen, wobei die Konfigurationsdaten generell gemäß irgendeinem Datentyp abgespeichert sind. Somit ist nicht generell eine Kompatibilität gegeben und somit kann es notwendig sein, hierzu weitere Verarbeitungsschritte einzuführen. So ist es gemäß der vorliegenden Erfindung vorgesehen, dass Datentypen entweder konvertiert werden oder aber das Berechnen einer Relation zwischen den serialisierten Konfigurationsdaten erfolgt derart, dass nur bestimmte Konfigurationsdaten in Relation gesetzt werden. Bestimmte Konfigurationsdaten heißt hierbei, dass paarweise Konfigurationsdaten verglichen werden, welche von einem gleichen oder einem kompatiblen Datentyp sind. Liegen mehr als zwei Matrizen vor, so wird eben nicht paarweise verglichen, sondern es werden gegebenenfalls auch Konfigurationsdaten von mehreren Matrizen in Relation gesetzt.

Hierbei ist es generell auch möglich, eine Relation nicht zwischen allen Konfigurationsdaten zu erzeugen, sondern erst zu überprüfen, ob eine Relation dadurch erzeugt werden kann, dass kompatible Datentypen vorliegen. Trifft der Algorithmus beispielsweise auf Konfigurationsdaten aus einer ersten Matrix, welche keine Entsprechung in den Konfigurationsdaten aus der zweiten Matrix haben, so wird eben keine Relation erzeugt. Somit erfolgt ein Auswählen der Konfigurationsdaten zum Erzeugen einer Relation.

Die abgespeicherten Matrizen können in jeweils einen Vektor übergeführt werden, wobei der Vektor serialisiert die Konfigurationsdaten der Matrix abspeichert. Werden nunmehr zwei Vektoren bzw. mindestens zwei Vektoren miteinander verglichen bzw. in Relation gesetzt, so kann jeweils der Eintrag innerhalb des Vektors mit einem weiteren Eintrag eines weiteren Rektors verglichen werden, wobei jeweils der entsprechende Index berücksichtigt wird. Werden die Konfigurationsdaten beispielsweise in einer ersten Spalte angeschrieben und die Konfigurationsdaten einer weiteren Matrix in einer zweiten Spalte angeschrieben, so können die Daten auch zeilenweise verglichen werden. Gibt es in der zweiten Zeile keine Entsprechung zu dem Eintrag aus der ersten Zeile, so wird keine Relation berechnet. Wie die Vektoren bzw. Spalten zu berechnen sind, ist in der Serialisierungsmetrik hinterlegt.

Die Serialisierungsmetrik kann für jede Matrize bestimmen, wie diese zu serialisieren ist. Eine Matrix kann beispielsweise zeilenweise ausgelesen werden und somit die einzelnen Einträge in einen Vektor geschrieben werden. Somit ist es generell möglich, die Matrix von einer zweidimensionalen Tabelle in eine eindimensionale Spalte zu überführen.

Die vorliegende Erfindung berücksichtigt auch mehrdimensionale Matrizen und die Serialisierungsmetrik gibt hierzu an, wie diese Dateneinträge in einen Vektor geschrieben werden. Generell ist es auch möglich eine Matrix in nicht nur einen Vektor zu überführen, sondern eben mehrere Vektoren zu erzeugen. Diese können gegebenenfalls auch redundante Datensätze aufweisen.

Die Matrizen werden mitsamt der abgespeicherten Konfigurationsdaten typischerweise über ein Netzwerk ausgelesen. Hierzu werden die Matrizen beispielsweise auf einem Server vorgehalten. Insofern handelt es sich ebenfalls typischerweise um heterogene Datenquellen, wobei sich heterogen im Wesentlichen auf die Datentypen und die zugrunde liegende Hardware bezieht. So ist es möglich, dass die Datenquellen gemäß unterschiedlicher Betriebssysteme bereitgestellt werden. Die Verarbeitungsschritte können zudem im Netzwerk derart verteilt werden, dass zuerst ein Auslesen auf einer ersten Recheneinheit erfolgt und dann ein Übermitteln der Konfigurationsdaten auf eine zweite Recheneinheit erfolgt, wo diese dann serialisiert, d.h. in Serie abgespeichert, werden. Darüber hinaus ist es jedoch vorteilhaft, dass die Serialisierung auf der Recheneinheit erfolgt, auf der die Matrix abgespeichert ist. Ferner ist es möglich einen seriellen Datenstrom über das Netzwerk zu versenden.

In bestimmten Anwendungsszenarien ist es vorteilhaft eine serielle Datenübertragung durchzuführen, da dies oftmals gegenüber der Übermittlung einer Matrix einfacher durchgeführt werden kann. So unterstützen typischerweise alle Netzwerkkomponenten serielle Datenströme und entsprechende Protokolle sehen entsprechende Sicherungsmechanismen vor. So kann über den seriellen Datenstrom eine Prüfsumme berechnet werden und der serielle Datenstrom entspricht der tatsächlichen realweltlichen Datenübertragung insofern, als dass typischerweise ein analoges Signal übertragen wird, welches dann anhand von Schwellwerten, welche sich auf eine Amplitude in dem analogen Signal beziehen, digitalisiert werden.

Generell können gemäß dem vorgeschlagenen Verfahren beliebig viele Matrizen miteinander verglichen bzw. in Relation gesetzt werden. Hierzu bedarf es aber mindestens zweier Matrizen. Insofern werden eine erste Matrix und mindestens eine weitere Matrix vorgeschlagen.

Bei einem Berechnen einer Relation zwischen den serialisierten Konfigurationsdaten handelt es sich um ein Vergleichen gemäß vorbestimmten Verfahrensschritten. Generell ist es möglich die Konfigurationsdaten derart zu vergleichen, dass beispielsweise ausgegeben wird, welche Konfigurationsdaten dem Betrag nach am größten sind. Diese Konfigurationsdaten können sodann ausgegeben werden. Somit erfolgt ein Erstellen neuer Konfigurationsdaten dadurch, dass bereits ausgelesene und serialisierte Konfigurationsdaten kopiert werden. Dies kann auch mittels einer Referenz auf die abgespeicherten Konfigurationsdaten erfolgen. Generell ist es erfindungsgemäß möglich aus beispielsweise zwei Vektoren jeweils den größeren Wert als neue Konfigurationsdaten anzusehen. Es kann jedoch auch der erste Vektor mit dem zweiten Vektor bzw. dem mindestens zweiten Vektor verglichen werden und sodann kann der Vektor ausgegeben werden, der eine bestimmte Relation erfüllt. Zusammenfassend lässt sich also folgern, dass in dem Fall, bei dem die Konfigurationsdaten numerisch sind anhand einer "größer" Relation festgestellt werden kann welche neue Konfigurationsdaten erzeugt werden sollen. Hierzu können Daten aus beiden Vektoren vermischt werden und jeweils beispielsweise der größere Wert in einen neuen Vektor geschrieben werden. Es ist aber auch möglich, dass beispielsweise gezählt wird, welche Konfigurationsdaten am größten sind und es wird derjenige Vektor als neuer Vektor erstellt, der die meisten größeren Einträge aufweist.

Liegen die Konfigurationsdaten als alphanumerische Daten vor, so können dementsprechend andere Regeln erstellt werden, die angeben, wie eine Relation zu erstellen ist. So können beispielsweise anhand einer Taxonomie Begrifflichkeiten in Verbindung gesetzt werden und die Relation beschreibt sodann eine Relation der Konfigurationsdaten innerhalb der zugrunde liegenden Datenstruktur. So kann die Relation beispielsweise eine Priorisierung vieler Begriffe beschreiben und sodann kann die Relation derart erstellt werden bzw. berechnet werden, dass höchst priorisierte Konfigurationsdaten ausgegeben werden und somit wird ein Vektor mit neuen Konfigurationsdaten erstellt, der eben diese höchst priorisierte Konfigurationsdaten aufweist.

In einem weiteren Beispiel ist es möglich, dass die Relation zwischen zwei Konfigurationsdaten dadurch gegeben wird, dass eine Differenz zwischen den beiden Daten berechnet wird, für den Fall dass diese numerisch sind. Die Relation ist also beispielsweise der Betrag einer Differenz. Neue Konfigurationsdaten können dann derart erstellt werden, dass die Differenz an sich die Konfigurationsdaten bildet oder aber, dass in Abhängigkeit der Differenzen innerhalb eines Relationsvektors die Konfigurationsdaten erstellt werden.

Gemäß einem Aspekt der vorliegenden Erfindung werden die Matrizen jeweils auf unterschiedlichen Speichervorrichtungen abgespeichert und netzwerktechnisch übermittelt. Dies hat den Vorteil, dass bei der Bereitstellung der Matrizen eine hohe Ausfallsicherheit herrscht, da diese über ein Netzwerk verteilt werden können und gegebenenfalls redundant abgespeichert werden können. Zudem ist das vorgeschlagene Verfahren unabhängig davon, dass die großen und umfangreichen Datensätze auf einer Vorrichtung abspeicherbar sind. Aufgrund der Verteilung im Netzwerk skaliert das vorgeschlagene Verfahren.

Gemäß einem weiteren Aspekt der vorliegenden Erfindung weisen die Matrizen Datensätze unterschiedlicher Datentypen auf und ein Berechnen einer Relation erfolgt stets zwischen Datensätzen gleicher Datentypen. Dies hat den Vorteil, dass heterogene Datentypen generell verwendet werden können, wobei das vorgeschlagene Verfahren überprüft, ob eine Relation überhaupt erzeugt werden kann. Folglich werden lediglich diejenigen Datensätze bzw. Konfigurationsdaten verwendet, welche miteinander kompatibel sind. Wird ein Vektor erzeugt, der die Relationen beschreibt, so können entsprechende Einträge von nicht kompatiblen Konfigurationsdaten leer bleiben.

Gemäß einem weiteren Aspekt der vorliegenden Erfindung wird ein Konvertieren von Datentypen durchgeführt. Dies hat den Vorteil, dass weitere Relationen berechnet werden können, auch wenn jeweils nicht der gleiche Datentyp vorliegt. So ist es beispielsweise möglich, einen numerischen Wert auch als Text abzuspeichern bzw. auch numerische Werte als Datentypen mit unterschiedlicher Bitanzahl abzuspeichern. So kann beispielsweise Gleitkommazahl als 32 Bit oder 64 Bit abgespeichert werden. Gemäß diesem Aspekt wird sichergestellt, dass möglichst viele Relationen berechnet werden können und in diesem Kontext ist es besonders vorteilhaft, dass die Datentypen hierzu derart konvertiert werden, dass diese nach Möglichkeit übereinstimmen.

Gemäß einem weiteren Aspekt der vorliegenden Erfindung werden die Konfigurationsdaten in Konfigurationsvektoren serialisiert. Dies hat den Vorteil, dass bestehende Implementierungen wieder verwendet werden können und insbesondere ist das Abspeichern innerhalb eines Vektors besonders effizient.

Gemäß einem weiteren Aspekt der vorliegenden Erfindung wird je Matrix eine Serialisierungsmetrik bereitgestellt, welche einen Hinweis darauf bereitstellt, wie Datensätze der Matrix transformiert werden. Dies hat den Vorteil, dass für jede Matrix zu jedem Zeitpunkt fest steht, wie diese ausgelesen wird und beispielsweise in welcher Reihenfolge die Konfigurationsdaten in Serie geschrieben werden.

Gemäß einem weiteren Aspekt der vorliegenden Erfindung erzeugen alle bereitgestellten Serialisierungsmetriken vergleichbare Vektoren. Dies hat den Vorteil, dass möglichst viele Relationen berechnet werden können. So können die Vektoren dadurch vergleichbar gemacht werden, dass bei einer unterschiedlichen Dimension bzw. Anzahl von Einträgen in zwei Vektoren derart eine gleiche Länge geschaffen wird, dass der kürzere Vektor mit Fülldaten aufgefüllt wird.

Gemäß einem weiteren Aspekt der vorliegenden Erfindung werden alle serialisierten Konfigurationsdaten, alle Relationen und oder alle neuen Konfigurationsdaten in der gleichen Datenbank abgespeichert. Dies hat den Vorteil, dass bei den rechenintensiven Vorgängen keine Verzögerung über ein Netzwerk erfolgt, sondern vielmehr werden diese Daten lokal vorgehalten und es kann ein gemeinsamer Pufferspeicher verwendet werden.

Gemäß einem weiteren Aspekt der vorliegenden Erfindung wird die Relation iterativ für jeweils eine Auswahl an Konfigurationsdaten erzeugt. Dies hat den Vorteil, dass die jeweiligen Vektoren bzw. in Serie geschriebenen Konfigurationsdaten durchgeprüft werden und für den Fall, dass sich eine Relation erzeugen lässt, wird paarweise ein Wert aus den Konfigurationsdaten aus der ersten Matrix und der zweiten Matrix verglichen. Liegen mehrere Matrizen vor, so werden die Konfigurationsdaten entsprechend der Indizierung verglichen. Beispielsweise wird bei drei Vektoren der erste Eintrag mit den weiteren ersten Einträgen verglichen. Der zweite Eintrag wird mit den weiteren zweiten Einträgen der anderen Vektoren verglichen. Bildlich gesprochen kann also bei einer Tabelle ein zeilenweises Vergleichen erfolgen.

Gemäß einem weiteren Aspekt der vorliegenden Erfindung wird ein Datenspeicher zur Bereitstellung von Rechenschritten zur Berechnung von Relationen bereitgestellt. Dies hat den Vorteil, dass die Relationen in diesem Datenspeicher vorbestimmt werden können und jederzeit angepasst werden können. Die Rechenschritte beschreiben, wie eine Relation erzeugt werden soll. Hierbei sind Berechnungsschritte zu unterscheiden, welche sich auf numerische Werte beziehen oder aber auf alphanumerische Werte. Bei numerischen Werten können die Rechenschritte eine Arithmetik beschreiben, wobei bei alphanumerischen Konfigurationsdaten eine Priorisierung erfolgen kann. Es sind jedoch auch andere Rechenschritte möglich.

Gemäß einem weiteren Aspekt der vorliegenden Erfindung umfasst das Erstellen neuer Konfigurationsdaten ein Anwenden der Relation auf Konfigurationsdaten, ein Übernehmen von bestehenden Konfigurationsdaten und/oder ein Auslesen weiterer Konfigurationsdaten. Dies hat den Vorteil, dass die neuen Konfigurationsdaten entweder aus den bestehenden Konfigurationsdaten ausgewählt werden können oder aber aus diesen Konfigurationsdaten berechnet werden können. So kann beispielsweise eine Relation darüber Aufschluss geben, welche Konfigurationsdaten im Weiteren zu verwenden sind.

Gemäß einem weiteren Aspekt der vorliegenden Erfindung werden die Konfigurationsdaten zum Ansteuern eines Endgeräts verwendet. Dies hat den Vorteil, dass die Ergebnisse des vorgeschlagenen Verfahrens in ein Endgerät rückgekoppelt werden können und somit können Betriebsparameter des Endgeräts durch die Konfigurationsdaten beeinflusst werden.

Die Aufgabe wird auch gelöst durch eine Systemanordnung zum effizienten Erzeugen von umfangreichen Konfigurationsdaten basierend auf heterogenen Datenquellen, aufweisend eine erste Schnittstelleneinheit eingerichtet zum Auslesen einer abgespeicherten Matrix mit Konfigurationsdaten und eine Serialisierungseinheit eingerichtet zum Serialisieren der ausgelesenen Konfigurationsdaten gemäß einer ersten Serialisierungsmetrik; mindestens eine zweite Schnittstelleneinheit eingerichtet zum Auslesen mindestens einer weiteren abgespeicherten Matrix mit Konfigurationsdaten und eine weitere Serialisierungseinheit eingerichtet zum Serialisieren der ausgelesenen Konfigurationsdaten gemäß einer zweiten Serialisierungsmetrik; einer Recheneinheit eingerichtet zum Berechnen einer Relation zwischen den serialisierten Konfigurationsdaten; und eine Ausgabeeinheit eingerichtet zum Erstellen neuer Konfigurationsdaten in Abhängigkeit der berechneten Relation.

Die Aufgabe wird auch gelöst durch ein Computerprogrammprodukt mit Steuerbefehlen, welche das vorgeschlagene Verfahren implementieren beziehungsweise die vorgeschlagene Vorrichtung betreiben.

Erfindungsgemäß ist es besonders vorteilhaft, dass das Verfahren zum Betreiben der vorgeschlagenen Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zu Umsetzung der Funktion der strukturellen Merkmale bereit. Darüber hinaus können physische Komponenten gleicherweise auch virtuell bzw. virtualisiert bereitgestellt werden.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:
- Figur 1:: ein schematisches Blockschaltbild der Systemanordnung zum effizienten Erzeugen von umfangreichen Konfigurationsdaten basierend auf heterogenen Datenquellen gemäß einem Aspekt der vorliegenden Erfindung;
- Figur 2:: ein Serialisieren der Matrizen in Vektoren zur Erzeugung eines weiteren Vektors gemäß einem Aspekt der vorliegenden Erfindung;
- Figur 3:: eine Darstellung der erzeugten Spalten mit serialisierten Datensätzen; und
- Figur 4:: ein schematisches Ablaufdiagramm des computerimplementierten Verfahrens zum effizienten Erzeugen von umfangreichen Konfigurationsdaten basierend auf heterogenen Datenquellen.

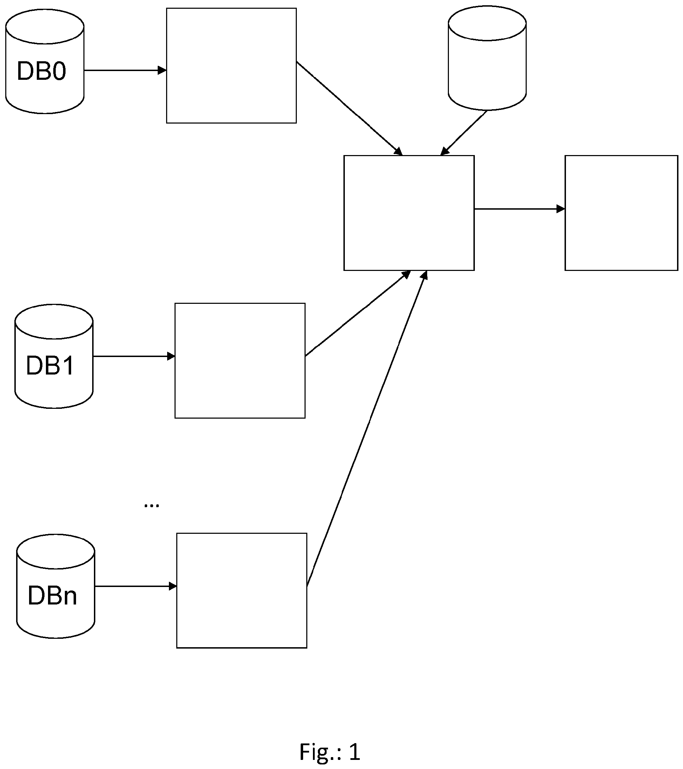

Figur 1 zeigt ein Blockschaltbild der vorgeschlagenen Systemanordnung. Oben in der Figur 1 ist die Verarbeitung der ersten Matrix gezeigt. Diese wird durch die erste Vorrichtung bereitgestellt und wurde vorliegend als eine Datenbank DBO eingezeichnet. Daraufhin wird die bereitgestellte Matrix über die rechts angeschlossene Komponente serialisiert. In dieser Komponente wird die Matrix beispielsweise zeilenweise ausgelesen und sodann beispielsweise in einen Vektor überführt. Dies folgt ebenso für mindestens eine zweite Matrix, wie dies darunter gezeigt ist. Auch diese zweite Matrix wird durch eine Datenbank DB1 bereitgestellt und an die rechts angeschlossene Komponente übermittelt und dort wird die Gesamtheit der Konfigurationsdaten serialisiert. In der vorliegenden Figur 1 ganz unten ist eingezeichnet, dass beliebig viele Matrizen bereitgestellt und serialisiert werden können.

Die in Serie geschriebenen Konfigurationsdaten werden sodann an eine gemeinsame Komponente übermittelt, die eine Relation berechnet. Auch diese Komponente ist an eine Datenbank angeschlossen, wie vorliegend gezeigt ist, da die Datenbank entsprechende Rechenschritte vorhält. Aufgrund der Ausgabe dieser Vorrichtung wird ein neuer Satz Konfigurationsdaten erstellt, was in der Komponente ganz rechts erfolgt.

Vorliegend wird ein computerimplementiertes Verfahren vorgeschlagen, wobei es dem auch nicht entgegensteht wenn einzelne Schritte manuell ausgeführt werden. Die Konfigurationsdaten können auch angeben, wie beispielsweise ein Ausgabegerät wie ein Drucker oder ein Display angesprochen wird.

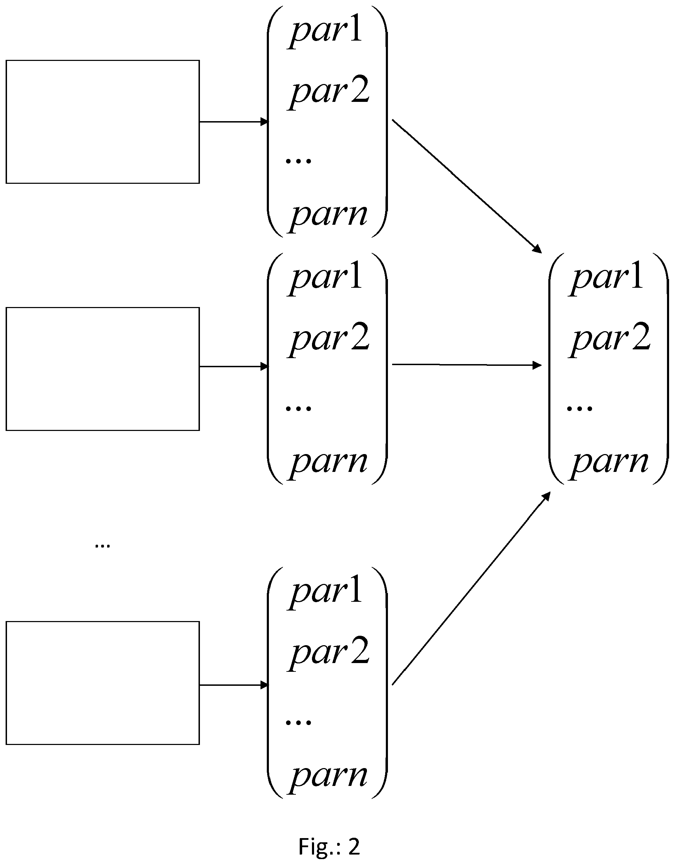

Figur 2 zeigt schematisch die verwendeten Daten. Auf der linken Seite sind jeweils die Rohdaten eingezeichnet, welche vorliegend als Matrizen abgespeichert sind. Wie in der Mitte zu sehen ist, werden diese Matrizen serialisiert, und in einen Vektor geschrieben. Nunmehr wird eine Relation erzeugt und diese Relation wird wiederum in einem Vektor abgespeichert. Dies ist auf der rechten Seite eingezeichnet.

Typischerweise enthält der Vektor auf der rechten Seite so viele Einträge wie der längste Vektor in der Mitte. Es ist jedoch auch möglich, dass in dem Vektor auf der rechten Seite nur diejenigen Relationen eingetragen werden, die auch berechnet werden konnten. Ist auch nach einer Konvertierung der jeweilige Datentyp nicht kompatibel zu einem zu vergleichenden Datentyp, so kann keine Relation erzeugt werden und es wird an entsprechender Stelle in dem rechten Vektor entweder ein Fehlercode eingetragen oder aber es wird für diese nicht mögliche Relation einfach der Datensatz ausgelassen. Somit kann auch der Vektor auf der rechten Seite kürzer sein als die Vektoren in der Mitte.

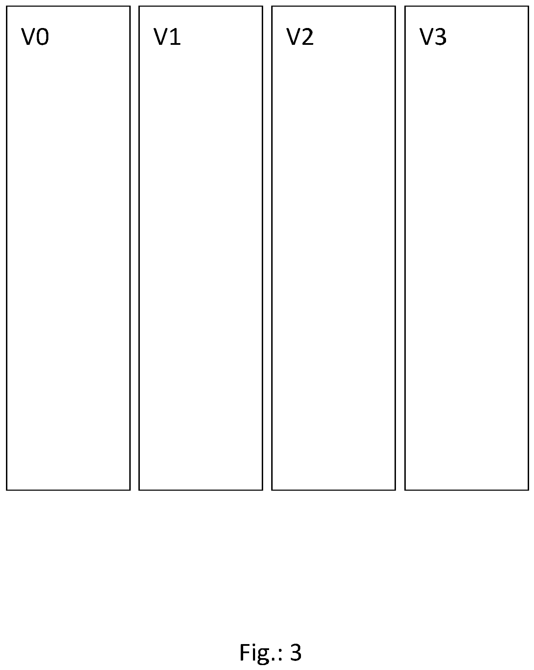

Figur 3 zeigt auf der linken Seite einen Vektor V0, welcher aus einer ersten Matrix erzeugt wurde, welcher nunmehr als eine Spalte angetragen ist. Daneben ist eine Spalte V1 eingezeichnet, die die Konfigurationsdaten der weiteren Matrix aufweist. Die dritte Spalte V2 zeigt eine Relation zwischen den Konfigurationsdaten an. Generell ist es auch möglich eine vierte Spalte V3 vorzusehen, die die neuen Konfigurationsdaten aufweist. Folglich wird für jeden erzeugten Vektor in dem vorliegenden Beispiel eine Spalte vorgesehen.

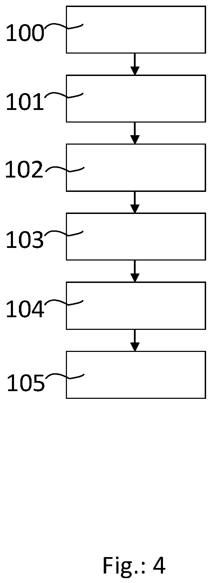

Figur 4 zeigt ein Computerimplementiertes Verfahren zum effizienten Erzeugen von umfangreichen Konfigurationsdaten basierend auf heterogenen Datenquellen, aufweisend ein Auslesen 100 einer abgespeicherten Matrix mit Konfigurationsdaten und Serialisieren 101 der ausgelesenen Konfigurationsdaten gemäß einer ersten Serialisierungsmetrik; ein Auslesen 102 mindestens einer weiteren abgespeicherten Matrix mit Konfigurationsdaten und Serialisieren 103 der ausgelesenen Konfigurationsdaten gemäß einer zweiten Serialisierungsmetrik; ein Berechnen 104 einer Relation zwischen den serialisierten Konfigurationsdaten; und ein Erstellen 105 neuer Konfigurationsdaten in Abhängigkeit der berechneten Relation.

Vorliegend nicht gezeigt ist ein Datenspeicher oder ein computerlesbares Medium mit einem Computerprogrammprodukt aufweisend Steuerbefehle, welche das vorgeschlagene Verfahren implementieren bzw. die vorgeschlagene Systemanordnung betreiben.

## Patentansprüche

1. Computerimplementiertes Verfahren zum effizienten Erzeugen von umfangreichen Konfigurationsdaten basierend auf heterogenen Datenquellen, aufweisend:
- ein Auslesen (100) einer abgespeicherten Matrix mit Konfigurationsdaten und Serialisieren (101) der ausgelesenen Konfigurationsdaten gemäß einer ersten Serialisierungsmetrik;
- ein Auslesen (102) mindestens einer weiteren abgespeicherten Matrix mit Konfigurationsdaten und Serialisieren (103) der ausgelesenen Konfigurationsdaten gemäß einer zweiten Serialisierungsmetrik;
- ein Berechnen (104) einer Relation zwischen den serialisierten Konfigurationsdaten; und
- ein Erstellen (105) neuer Konfigurationsdaten in Abhängigkeit der berechneten Relation.

2. Verfahren nach Anspruch 1, **dadurch gekennzeichnet, dass** die Matrizen jeweils auf unterschiedlichen Speichervorrichtungen abgespeichert sind und netzwerktechnisch übermittelt werden.

3. Verfahren nach Anspruch 1 oder 2, **dadurch gekennzeichnet, dass** die Matrizen Konfigurationsdaten unterschiedlicher Datentypen aufweisen und ein Berechnen (104) einer Relation stets zwischen Konfigurationsdaten gleicher Datentypen erfolgt.

4. Verfahren nach einem der vorhergehenden Ansprüche, **dadurch gekennzeichnet, dass** ein Konvertieren von Datentypen durchgeführt wird.

5. Verfahren nach einem der vorhergehenden Ansprüche, **dadurch gekennzeichnet, dass** die Konfigurationsdaten in Konfigurationsvektoren serialisiert werden.

6. Verfahren nach einem der vorhergehenden Ansprüche, **dadurch gekennzeichnet, dass** je Matrix eine Serialisierungsmetrik bereitgestellt wird, welche einen Hinweis darauf bereitstellt, wie Datensätze der Matrix transformiert werden.

7. Verfahren nach einem der vorhergehenden Ansprüche, **dadurch gekennzeichnet, dass** alle bereitgestellten Serialisierungsmetriken vergleichbare Vektoren erzeugen.

8. Verfahren nach einem der vorhergehenden Ansprüche, **dadurch gekennzeichnet, dass** alle serialisierten Konfigurationsdaten, alle Relationen und/ oder alle neuen Konfigurationsdaten in der gleichen Datenbank abgespeichert werden.

9. Verfahren nach einem der vorhergehenden Ansprüche, **dadurch gekennzeichnet, dass** die Relation iterativ für jeweils eine Auswahl an Konfigurationsdaten erzeugt wird.

10. Verfahren nach einem der vorhergehenden Ansprüche, **dadurch gekennzeichnet, dass** ein Datenspeicher mit Rechenschritten zur Berechnung von Relationen bereitgestellt wird.

11. Verfahren nach einem der vorhergehenden Ansprüche, **dadurch gekennzeichnet, dass** das Erstellen (105) neuer Konfigurationsdaten ein Anwenden der Relation auf Konfigurationsdaten, ein Übernehmen von bestehenden Konfigurationsdaten und/ oder ein Auslesen weiterer Konfigurationsdaten umfasst.

12. Verfahren nach einem der vorhergehenden Ansprüche, **dadurch gekennzeichnet, dass** die Konfigurationsdaten zum Ansteuern eines Endgeräts verwendet werden.

13. Systemanordnung zum effizienten Erzeugen von umfangreichen Konfigurationsdaten basierend auf heterogenen Datenquellen, aufweisend:
- eine erste Schnittstelleneinheit eingerichtet zum Auslesen (100) einer abgespeicherten Matrix mit Konfigurationsdaten und eine Serialisierungseinheit eingerichtet zum Serialisieren (101) der ausgelesenen Konfigurationsdaten gemäß einer ersten Serialisierungsmetrik;
- mindestens eine zweite Schnittstelleneinheit eingerichtet zum Auslesen (102) mindestens einer weiteren abgespeicherten Matrix mit Konfigurationsdaten und eine weitere Serialisierungseinheit eingerichtet zum Serialisieren (103) der ausgelesenen Konfigurationsdaten gemäß einer zweiten Serialisierungsmetrik;
- einer Recheneinheit eingerichtet zum Berechnen (104) einer Relation zwischen den serialisierten Konfigurationsdaten; und
- eine Ausgabeeinheit eingerichtet zum Erstellen (105) neuer Konfigurationsdaten in Abhängigkeit der berechneten Relation.

14. Computerprogrammprodukt, umfassend Befehle, die bei der Ausführung des Programms durch einen Computer diesen veranlassen, die Schritte des Verfahrens nach einem der Ansprüche 1 bis 12 auszuführen.

15. Computerlesbares Speichermedium, umfassend Befehle, die bei der Ausführung durch einen Computer diesen veranlassen, die Schritte des Verfahrens nach einem der Ansprüche 1 bis 12 auszuführen.

## Geänderte Patentansprüche

### Geänderte Patentansprüche gemäss Regel 137(2) EPÜ.

1. Computerimplementiertes Verfahren zum effizienten Erzeugen von umfangreichen Konfigurationsdaten basierend auf heterogenen Datenquellen, aufweisend:
- ein Auslesen (100) einer abgespeicherten zweidimensionalen Matrix mit Konfigurationsdaten und Serialisieren (101) der ausgelesenen Konfigurationsdaten gemäß einer ersten Serialisierungsmetrik;
- ein Auslesen (102) mindestens einer weiteren abgespeicherten zweidimensionalen Matrix mit Konfigurationsdaten und Serialisieren (103) der ausgelesenen Konfigurationsdaten gemäß einer zweiten Serialisierungsmetrik;
- ein Berechnen (104) einer Relation zwischen den serialisierten Konfigurationsdaten; und
- ein Erstellen (105) neuer Konfigurationsdaten in Abhängigkeit der berechneten Relation, was ein Auslesen weiterer Konfigurationsdaten umfasst.

2. Verfahren nach Anspruch 1, **dadurch gekennzeichnet, dass** die Matrizen jeweils auf unterschiedlichen Speichervorrichtungen abgespeichert sind und netzwerktechnisch übermittelt werden.

3. Verfahren nach Anspruch 1 oder 2, **dadurch gekennzeichnet, dass** die Matrizen Konfigurationsdaten unterschiedlicher Datentypen aufweisen und ein Berechnen (104) einer Relation stets zwischen Konfigurationsdaten gleicher Datentypen erfolgt.

4. Verfahren nach einem der vorhergehenden Ansprüche, **dadurch gekennzeichnet, dass** ein Konvertieren von Datentypen durchgeführt wird.

5. Verfahren nach einem der vorhergehenden Ansprüche, **dadurch gekennzeichnet, dass** die Konfigurationsdaten in Konfigurationsvektoren serialisiert werden.

6. Verfahren nach einem der vorhergehenden Ansprüche, **dadurch gekennzeichnet, dass** je Matrix eine Serialisierungsmetrik bereitgestellt wird, welche einen Hinweis darauf bereitstellt, wie Datensätze der Matrix ausgelesen und in welcher Reihenfolge die Konfigurationsdaten in Serie geschriebenwerden.

7. Verfahren nach einem der vorhergehenden Ansprüche, **dadurch gekennzeichnet, dass** alle bereitgestellten Serialisierungsmetriken vergleichbare Vektoren gleicher Länge erzeugen, derart, dass der kürzere Vektor mit Fülldaten aufgefüllt wird.

8. Verfahren nach einem der vorhergehenden Ansprüche, **dadurch gekennzeichnet, dass** alle serialisierten Konfigurationsdaten, alle Relationen und/ oder alle neuen Konfigurationsdaten in der gleichen Datenbank abgespeichert werden.

9. Verfahren nach einem der vorhergehenden Ansprüche, **dadurch gekennzeichnet, dass** die Relation iterativ für jeweils eine Auswahl an Konfigurationsdaten erzeugt wird.

10. Verfahren nach einem der vorhergehenden Ansprüche, **dadurch gekennzeichnet, dass** ein Datenspeicher mit Rechenschritten zur Berechnung von Relationen bereitgestellt wird.

11. Verfahren nach einem der vorhergehenden Ansprüche, **dadurch gekennzeichnet, dass** das Erstellen (105) neuer Konfigurationsdaten ein Anwenden der Relation auf Konfigurationsdaten und / oder ein Übernehmen von bestehenden Konfigurationsdaten umfasst.

12. Verfahren nach einem der vorhergehenden Ansprüche, **dadurch gekennzeichnet, dass** die Konfigurationsdaten zum Ansteuern eines Endgeräts verwendet werden.

13. Systemanordnung zum effizienten Erzeugen von umfangreichen Konfigurationsdaten basierend auf heterogenen Datenquellen, aufweisend:
- eine erste Schnittstelleneinheit eingerichtet zum Auslesen (100) einer abgespeicherten zweidimensionalen Matrix mit Konfigurationsdaten und eine Serialisierungseinheit eingerichtet zum Serialisieren (101) der ausgelesenen Konfigurationsdaten gemäß einer ersten Serialisierungsmetrik;
- mindestens eine zweite Schnittstelleneinheit eingerichtet zum Auslesen (102) mindestens einer weiteren abgespeicherten zweidimensionalen Matrix mit Konfigurationsdaten und eine weitere Serialisierungseinheit eingerichtet zum Serialisieren (103) der ausgelesenen Konfigurationsdaten gemäß einer zweiten Serialisierungsmetrik;
- einer Recheneinheit eingerichtet zum Berechnen (104) einer Relation zwischen den serialisierten Konfigurationsdaten; und
- eine Ausgabeeinheit eingerichtet zum Erstellen (105) neuer Konfigurationsdaten in Abhängigkeit der berechneten Relation, was ein Auslesen weiterer Konfigurationsdaten umfasst

14. Computerprogrammprodukt, umfassend Befehle, die bei der Ausführung des Programms durch einen Computer diesen veranlassen, die Schritte des Verfahrens nach einem der Ansprüche 1 bis 12 auszuführen.

15. Computerlesbares Speichermedium, umfassend Befehle, die bei der Ausführung durch einen Computer diesen veranlassen, die Schritte des Verfahrens nach einem der Ansprüche 1 bis 12 auszuführen.
